# EUROPEAN PATENT APPLICATION

(11) **EP 1 526 068 A2**
(43) Date of publication of application: **27.04.2005**
(21) Application number: 04024979.9
(22) Date of filing: 20.10.2004
(51) Int. Cl.: B62M 7/12

(54) **Scooter type vehicle**

(30) Priority: 20.10.2003 JP 2003358755
(71) Applicant: YAMAHA HATSUDOKI KABUSHIKI KAISHA, Iwata-shi Shizuoka-ken (JP)
(72) Inventor: Koike, Munetaka, Iwata-shi Shizuoka-ken (JP); Yamashita, Izumi, Iwata-shi Shizuoka-ken (JP)
(74) Representative: Grünecker, Kinkeldey, Stockmair & Schwanhäusser Anwaltssozietät

(57) **Abstract**

The invention relates to a scooter type vehicle comprising a body frame and an engine unit swingably suspended and supported at a position of said body frame.

The invention aims to to provide an improved scooter type vehicle, wherein structural surroundings of an engine are simplified.

Therefore, the invention provides that a throttle body (43) provided on an intake pipe (42a) of said engine unit is provided forwardly of the position at which the engine unit is suspended and supported.

## Description

This invention relates to a scooter type vehicle comprising a body frame and an engine unit swingably suspended and supported at a position of said body frame.

Scooter type vehicles include, for example, small-sized motorcycles, in which an engine unit is supported on a vehicle frame and which is provided at a central portion of a body with a seat to permit a driver to sit thereon. Such scooter type vehicle is described in, for example, JP-A-2000-313389.

An engine unit of a scooter type vehicle, in which a cylinder head of a two-cycle engine or a four-cycle engine tumbles substantially horizontally forward and a crankshaft is arranged in the width direction of the vehicle, is united with an automatic transmission and suspended from a main frame disposed at a central portion of a body. An intake pipe is connected to the cylinder head and a throttle body is provided on the intake pipe. The throttle body is a carburetor in case of an engine in use of a carburetor, and a throttle body housing therein a throttle valve in use of a fuel injection engine. Since the intake pipe is arranged above the cylinder head, the throttle body projects above the engine unit. An air cleaner is provided at an end of the intake pipe to be communicated to the throttle body.

The main frame comprises a down tube joined to a head pipe, through which a steering shaft is inserted, and extending obliquely downward, and left and right main frames joined to both left and right sides of a lower end of the down tube to rise obliquely rearward at a central portion of the body to extend, the left and right main frames being connected together at a substantially at a central portion of the body by a cross frame.

A helmet box is mounted on the main frame above the engine, and a seat is provided on the box. A recess is formed on a bottom of the helmet box to keep out the throttle body, which projects above the engine, and so a projection is formed at a substantially central portion of a bottom surface inside the box.

In scooter type vehicles of such construction, it is demanded to improve a position, in which an engine unit is suspended, and an arrangement of a throttle body of an intake system to achieve miniaturization of a body construction.

Therefore, it is an object of the invention to provide an improved scooter type vehicle, wherein structural surroundings of an engine are simplified.

For the scooter type motorcycle of the above kind, this object is solved in an inventive manner in that a throttle body provided on an intake pipe of said engine unit is provided forwardly of the position at which the engine unit is suspended and supported.

According to the invention, since the throttle body is arranged forwardly of a position, in which the engine unit is suspended and supported, an intake passage extending from the throttle body to the cylinder head is shortened and an intake system is simplified in construction. Moreover, in particular, with four-cycle engines, a short intake passage makes the output characteristics suited to high-speed revolution corresponding to the inertia of intake, so that output is heightened in a high-speed region.

Preferably, the position at which the engine unit is suspended and supported is substantially just above a crankshaft of the engine unit.

Further, preferably said body frame includes a head pipe through which a steering shaft extends, a main frame joined to the head pipe to branch rearwardly to the left and right side of the vehicle towards the rear thereof, a cross frame connecting the left and right main frames at a central portion of the main frame, and/or a connection member joining said main frames at a rear end of the body frame.

Furthermore, preferably the throttle body is provided rearwardly of the cross frame.

Still further, preferably engine suspension brackets are fixed at substantially central portions of the body frame, in particular at substantially central portions of respective left and right main frames thereof, wherein left and right link plates to which the engine unit is attached are swingably connected to the engine suspension brackets.

Moreover, preferably an engine support member is provided between left and right link plates to suspend and support the engine unit, and/or in that the right and left link plates are connected together via a cross member, the cross member being preferably provided rearwardly of the throttle body.

Also, preferably the cross member is provided across and above the intake pipe, which communicates between the throttle body and the air cleaner.

According to a preferred embodiment, a helmet box is supported on a main frame at a central portion of the body frame, a seat is provided on the helmet box, and/or the engine unit is provided below the helmet box in a state, in which a cylinder head tumbles substantially horizontally forward, wherein a crankshaft is arranged in the width direction of the vehicle, and wherein preferably a forward end of the cylinder head is arranged rearwardly of a forward end of the helmet box.

According to a further preferred embodiment, the intake pipe is connected to a cylinder head of the engine unit from above the cylinder head, and/or in that an air cleaner is provided on an end of the intake pipe upstream of the throttle body.

According to a furthermore preferred embodiment, an air cleaner is provided above the engine unit, and a rear cushion is provided to overlap a rear end of the air cleaner, or positioned rearwardly of the rear end of the air cleaner, as viewed in side view, and/or in that the air cleaner is arranged on a side of a rear wheel with a part thereof overlapping the rear wheel, and another part thereof projecting toward the rear wheel.

According to a still further preferred embodiment, the main frame comprises a down tube joined to the head pipe to extend obliquely rearward, and left and right main frames joined to both left and right sides of a lower end of the down tube to rise obliquely rearwardly at a central portion of the body frame to extend, and/or in that a forward end of a cylinder head is positioned in substantially the same position as, or rearwardly of those positions of the rising portions of the left and right main frames at the central portion of the body frame as viewed in side view.

Further preferred embodiments of the invention are subject to the subclaims.

In the following, the invention will be described in greater detail by means of preferred embodiments thereof with reference to the attached drawings, wherein:
- Fig. 1: is a side view of a scooter according to an embodiment of the invention;
- Fig. 2: is a side view of a body frame of the scooter shown in Fig. 1;
- Fig. 3: is a plan view of the body frame shown in Fig. 2;
- Fig. 4: is a side view of the body frame with parts laid thereon;
- Fig. 5: is a plan view of the body frame shown in Fig. 4;
- Figs. 6A and B: are a plan view and a side view showing of a helmet box;
- Fig. 7: is a rear view of the scooter shown in Fig. 1;
- Figs. 8A to C: are views illustrating a configuration of an engine suspension bracket;
- Figs. 9A and B: are views illustrating a configuration of a link plate;
- Figs. 10A to C: are views illustrating a configuration of a cushion material;
- Fig. 11: is a perspective view showing a state, in which the link plate is assembled; and

- Fig. 12: is a front view showing a state, in which the link plates are assembled.

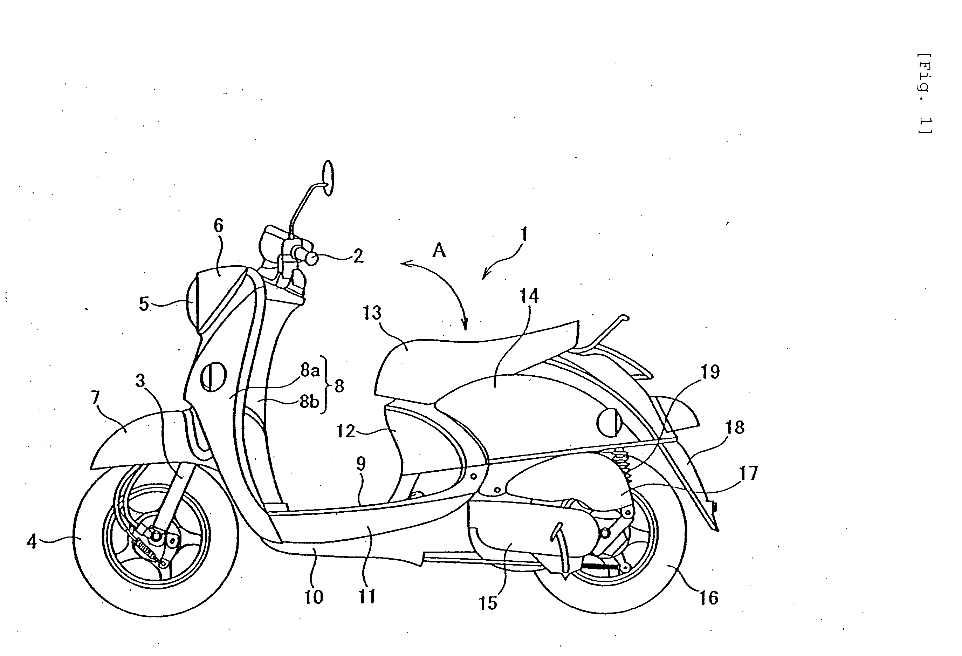

Fig. 1 is a side view showing a scooter type vehicle (scooter) according to an embodiment of the invention.

The scooter 1 comprises front forks 3 connected to a central steering shaft (not shown) of a handle 2 and a front wheel 4 supported on the left and right front forks 3. An upper side of the front wheel 4 is covered by a front fender 7. A headlight 5 is provided forwardly of the steering shaft and covered by a headlight cover 6. A body frame (not shown) on a body front side including the steering shaft is covered by a leg shield 8, which constitutes a body front cover. The leg shield 8 comprises a combination of a front shield 8a to cover a front side of the body frame, and a rear shield 8b to cover a rear side, and connects a foot board 9 to a lower end thereof. A lower side of the foot board 9 is covered by an undercover 10. Left and right moles 11 cover regions between the foot board 9 and the undercover 10.

A seat 13 is arranged at a central portion of the body. A central cover 12 covers a region between a lower end of the foot board 9 and the seat 13. The body rearwardly of the central cover 12 is covered by left and right side covers 14.

An engine unit 15 connected to a rear wheel 16 is provided rearwardly of a lower portion of the body. An air cleaner 17 is provided above the engine unit 15 to overlap the rear wheel 16.

A rear fender 18 is provided above and rearwardly of the rear wheel 16. A rear cushion 19 is provided to overlap a rear end of the air cleaner 17.

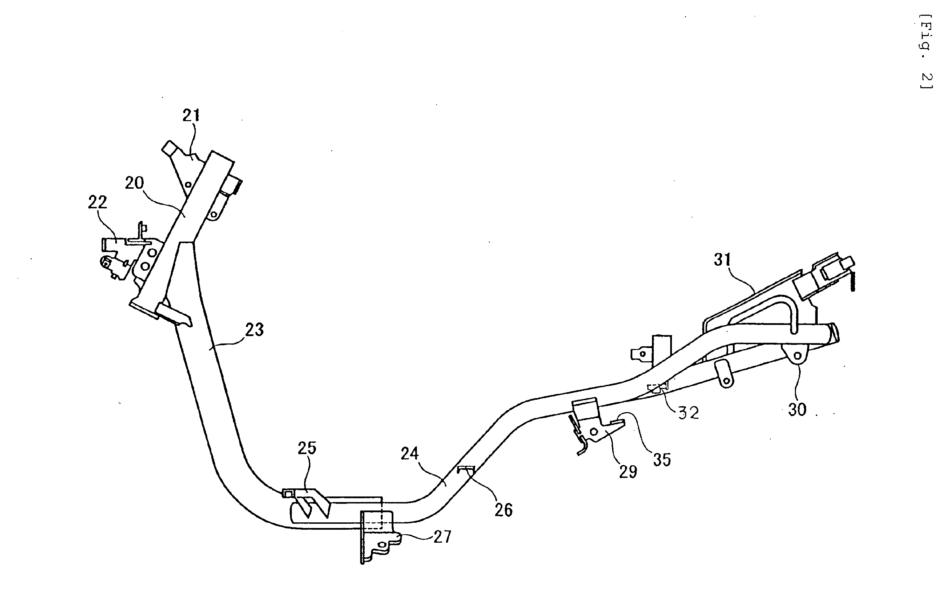

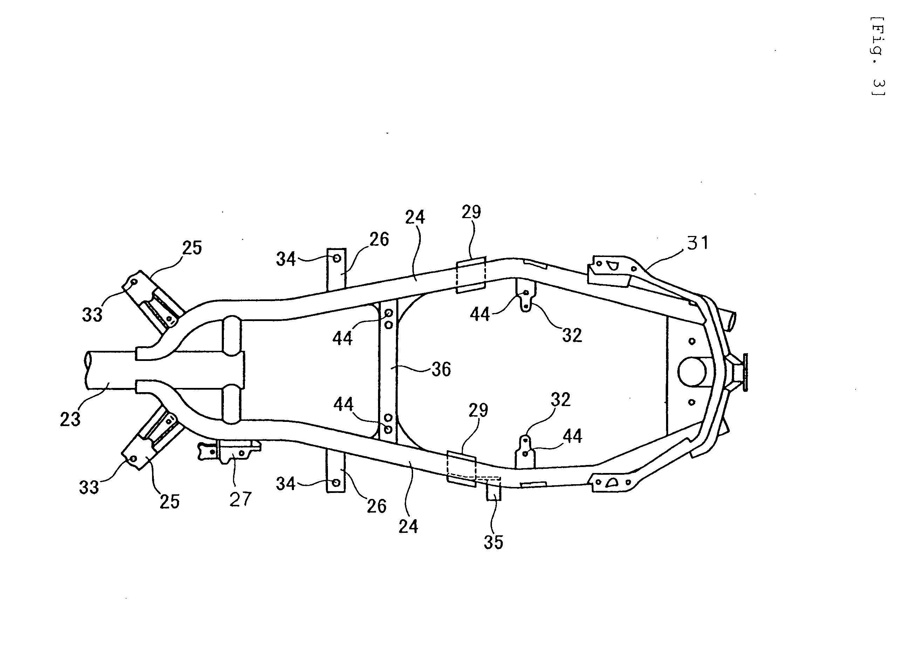

Figs. 2 and 3 are a side view and a plan view, which show the body frame of the scooter shown in Fig. 1.

A headlight mount bracket 21 and a leg-shield mount bracket 22 are provided on a head pipe 20 on a body front portion. A down tube 23 is fixedly welded to be directed obliquely rearwardly of the head pipe 20. A lower end of the down tube 23 is bent horizontally and joins to left and right sides thereof main frames 24 made of a round pipe material. The respective left and right main frames 24 rise obliquely rearwardly at a central portion of the body to form a main frame composed of an integral pipe material extending continuously longitudinally of the body. The main frames 24 are provided with foot-board mount brackets 25, 26. Reference numerals 33, 34 denote foot-board mount holes. The left and right main frames 24 are connected together and reinforced at rear ends (substantially central portions of the body) of rising portions thereof by a cross frame 36. Reference numeral 27 denotes a side stand mount bracket.

Engine suspension brackets 29 are fixedly welded at substantially central portions of the left and right main frames 24. The bracket 29 on a left side of the body is provided with a stopper 35, against which a cushion member (not shown) abuts at the time of swinging. Also, the main frame 24 on at least one, preferably the left side of the body is provided at a rear end thereof with a rear-cushion mount bracket 30.

Rear ends of the left and right main frames 24 are connected to each other by a connection member 31, which serves in reinforcement and in mounting of a tail lamp. The respective main frames 24 are provided with helmet box support brackets 32.

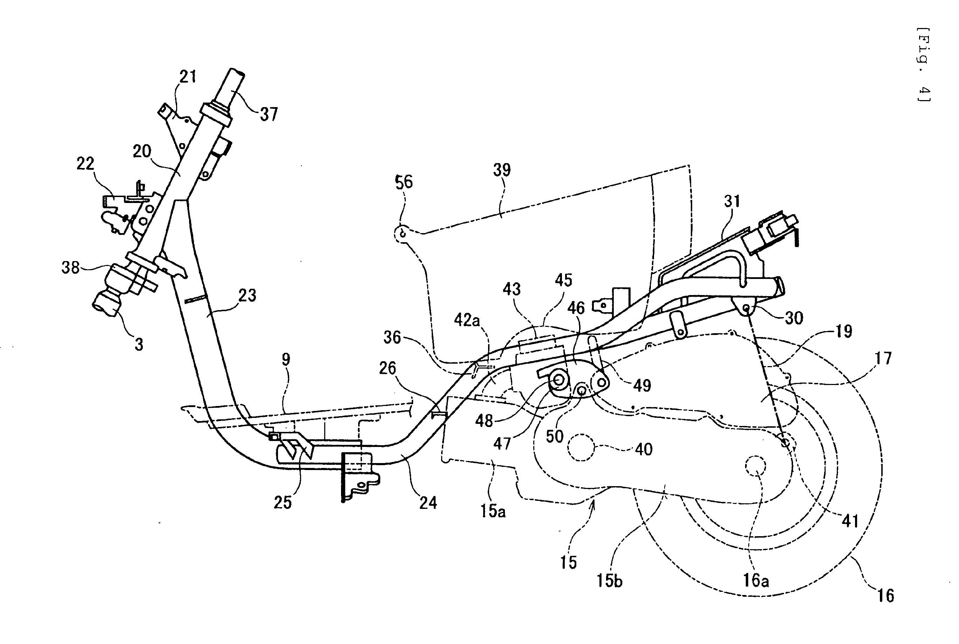

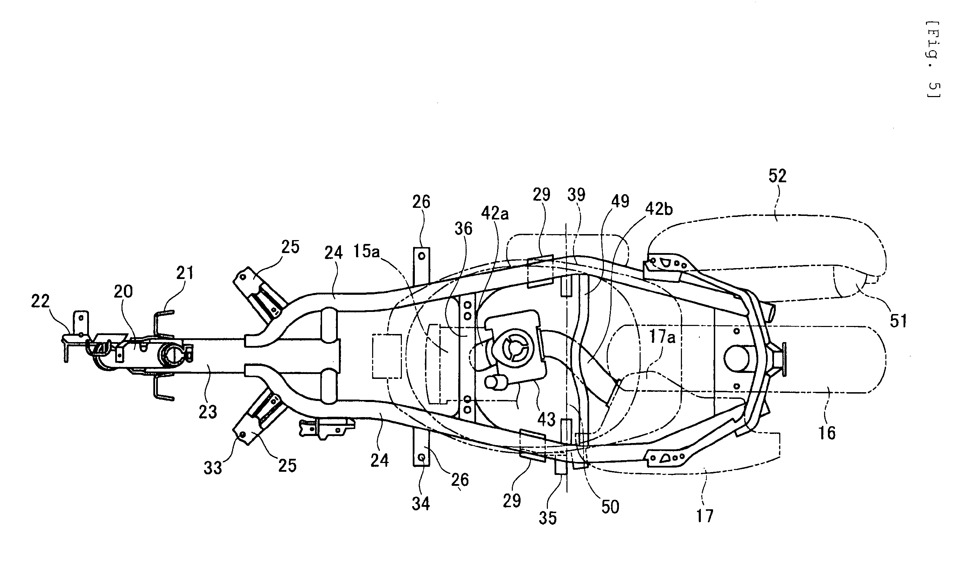

Figs. 4 and 5 are a side view and a plan view, which show the part layout for the body frame shown in Figs. 2 and 3. A steering shaft 37 is inserted through the head pipe 20. A lower end of the steering shaft 37 is connected to the left and right front forks 3 through an under bracket 38.

A cushion support 41 is formed on a side of an axle 16a of the rear wheel 16 toward a support frame to project rearwardly of the axle 16a. The rear cushion 19 is mounted between a rear end of the cushion support 41 and the bracket 30 at the rear end of the main frame 24. In this manner, since a position, in which a lower end of the rear cushion 19 is mounted, is disposed rearwardly of the axle 16a of the rear wheel 16, a region, in which the air cleaner 17 arranged above a side of the rear wheel can be subjected to interference, is decreased to permit the air cleaner to be increased in volume. While a major part of the air cleaner 17 is provided above the engine unit 15 to overlap the rear wheel 16, a forward end of the air cleaner does not overlap the rear wheel 16 but projects forward and an expanded portion 17a projecting toward the rear wheel (toward the center of the body) is formed inwardly of the forward end as shown in Fig. 5 to contribute to an increase in volume.

The engine unit 15 comprises, as a unit, an engine portion, in which a cylinder head 15a tumbles substantially horizontally forward, and an automatic transmission 15b connecting between a crankshaft 40 of the engine and the axle 16a of the rear wheel 16. The cylinder head 15a is arranged between the left and right main frames 24 to be positioned rearwardly and downwardly of that portion of the main frames 24, which rises obliquely rearward as shown in Fig. 4.

An intake pipe 42a is connected to above the cylinder head 15a. The intake pipe 42a is communicated to a carburetor 43. The air cleaner 17 is provided at an end of an intake pipe 42b disposed upstream of the carburetor 43. A position, in which a forward end of the intake pipe 42a is connected to the cylinder head 15a, is substantially the same as or rearwardly of the cross frame 36.

A helmet box 39 is mounted on the left and right main frames 24. The helmet box 39 is bolted and fixed to mount holes 44 of the cross frame 36 and the brackets 32, which are provided on the main frames 24, as shown in Fig. 3. The seat 13 (Fig. 1) is mounted on the helmet box 39. A forward end of the seat is mounted to a hinge 56 at an upper edge of a forward end of the helmet box 39 to be able to open and close as indicated by an arrow A (Fig. 1). The forward end of the helmet box 39 is positioned forwardly of a forward end of the cylinder head 15a.

A recess 45 is formed at a substantially central portion of a bottom surface of the helmet box 39 so that the carburetor 43 arranged below an underside of the helmet box is prevented from abutting against the helmet box 39. Accordingly, the bottom surface inside the helmet box 39 expands and projects at the central portion corresponding to a position of the carburetor (the throttle body).

The engine suspension brackets 29 (Figs. 3 and 5) are fixedly welded at substantially central portions of the respective left and right main frames 24. Link plates 46 (Fig. 4) are pivotally mounted to the respective left and right brackets 29. Forward ends of the link plates 46 are supported pivotally on the respective brackets 29 through rubber bushes 47. Accordingly, the link plates 46 swing about those pivots 48 at the forward ends thereof, onto which the rubber bushes 47 are fitted.

Rear ends of the left and right link plates 46 are connected together by a cross member 49. The cross member 49 is provided across the intake pipe 42b (Fig. 5), which communicates between the carburetor 43 and the air cleaner 17.

An engine suspension shaft 50 is provided on lower edges at central portions of the left and right link plates 46 to extend between the both link plates 46. The engine unit 15 is suspended from and supported on the engine suspension shaft 50. The position of suspension is substantially just above the crankshaft 40.

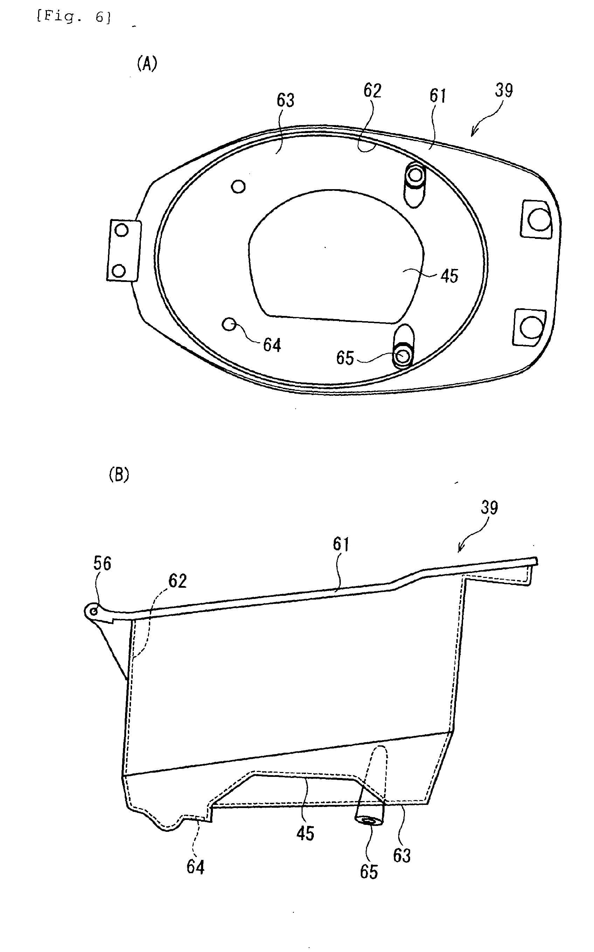

Figs. 6(A) and 6(B) are a plan view and a side view of the helmet box.

A flange 61 is formed on an upper edge of the helmet box 39, and the recess 45 keeping out of the carburetor 43 (Fig. 4) described above projects inwardly and outwardly from a bottom surface 63 of a box interior 62. Mount holes 64, 65 are provided on the bottom surface 63, so that fixation is effected by bolts (not shown) through the mount holes 44 of the cross frame 36 and the brackets 32 shown in Fig. 3.

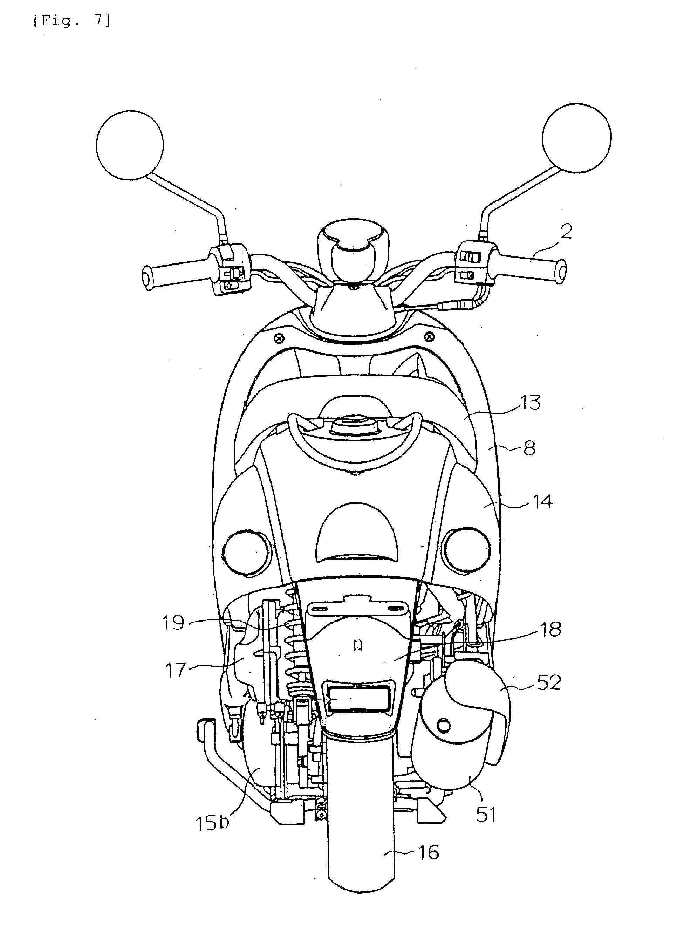

Fig. 7 is a rear view of the scooter shown in Fig. 1.

As shown in the figure, the automatic transmission 15a of the engine unit 15 is provided on a left side of the rear wheel 16, and the air cleaner 17 is arranged above the automatic transmission. As described above (Fig. 4), the rear cushion 19 is mounted between the rear end of the air cleaner 17 and the rear wheel 16. A muffler 51 is provided on a right side of the rear wheel 16.

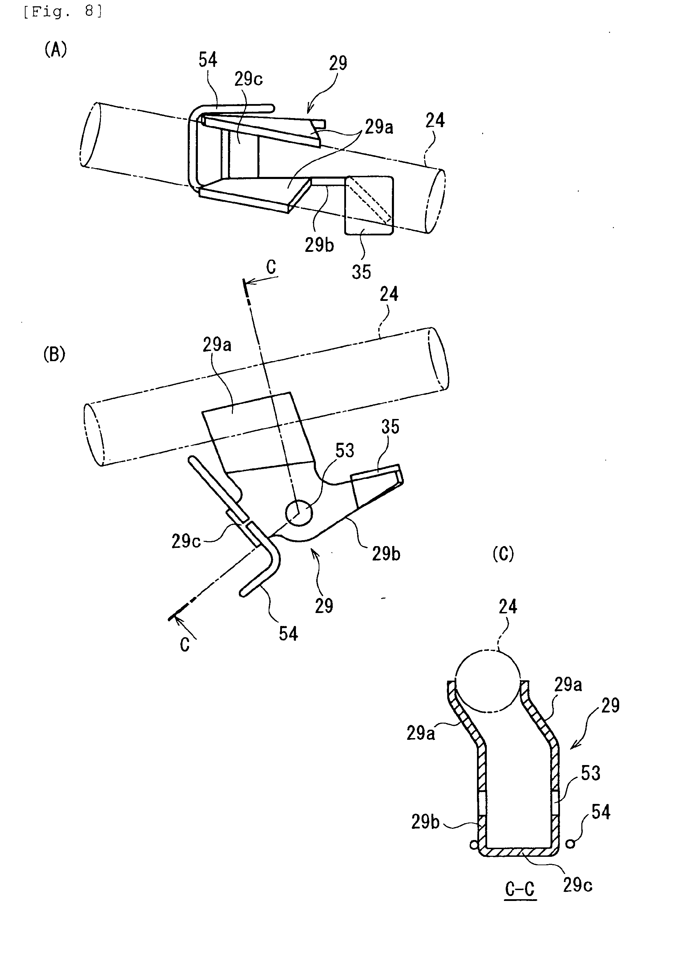

Fig. 8 is a view illustrating a configuration of the engine suspension bracket, Fig. 8(A) being a plan view, Fig. 8(B) being a front view, and Fig. 8(C) being a side view.

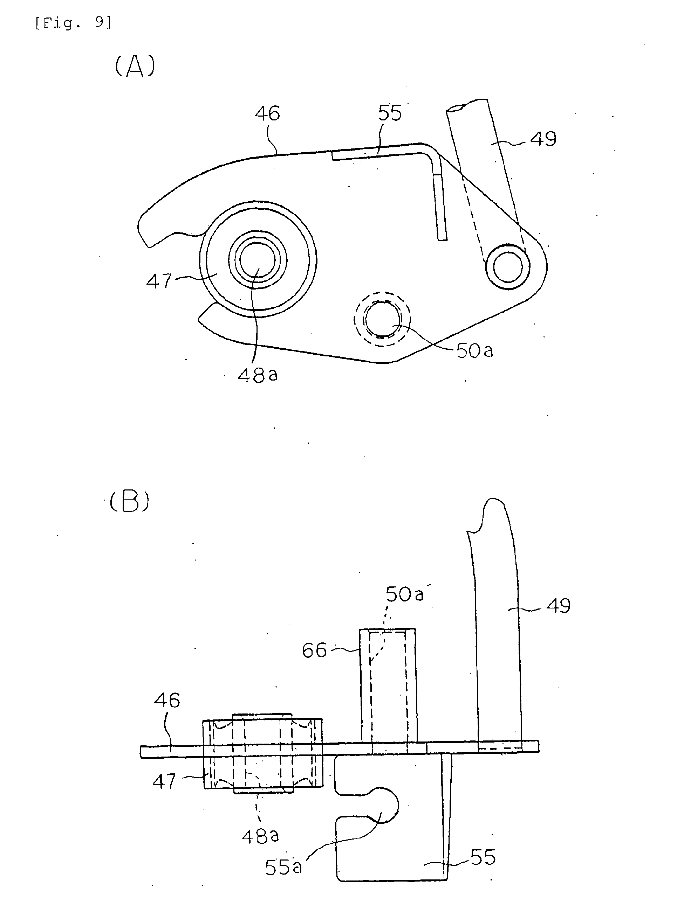

The bracket 29 comprises a pair of side pieces 29a, lower pieces 29b below the respective side pieces 29a, and a connection piece 29c for connection of the both lower pieces 29b, and a stopper 35 is provided on an end of one of the lower pieces 29b. The lower pieces 29b are formed with link mount holes 53, to which the link plates 46 (Figs. 4 and 9) are mounted pivotally. Reference numeral 54 denotes a wire holder to hold a harness or a cable (not shown). The bracket 29 is fixed by welding the both side pieces 29a to the main frame 24 on the left side of the body. The bracket on the right side of the body is substantially the same in structure as the bracket on the left side except that the wire holder 54 is different therebetween in shape and the stopper 35 is not provided.

Fig. 9 is a view illustrating a configuration of the link plate, Fig. 9(A) being a front view, and Fig. 9(B) being a plan view.

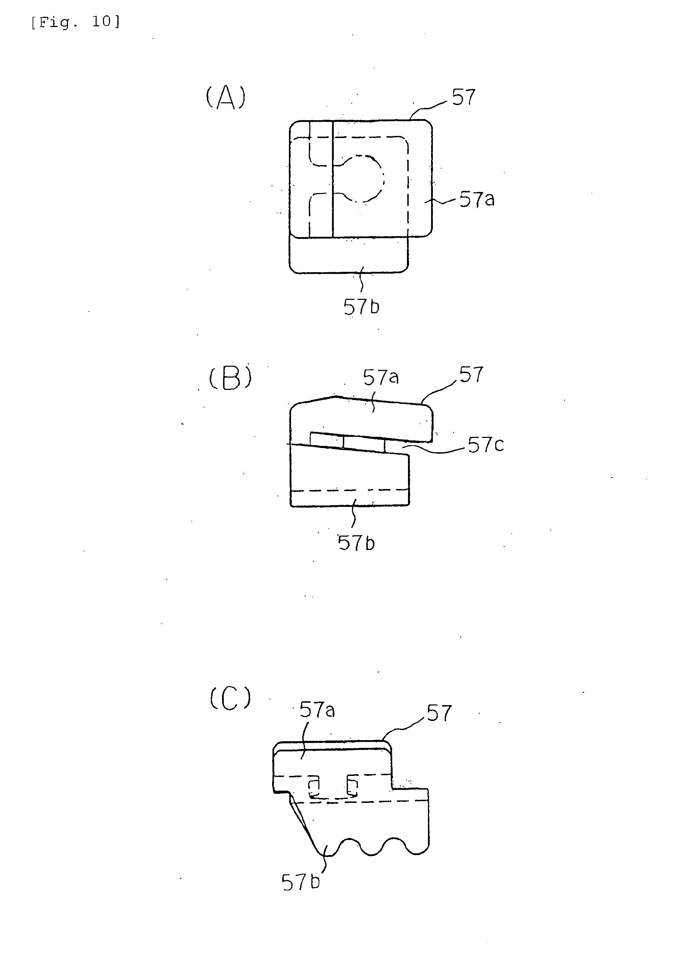

The rubber bush 47 is fitted at the forward end of the link plate 46, and the link plate is mounted pivotally to the bracket 29 shown in Fig. 8 through the rubber bush 47. More specifically, the pivot 48 (Fig. 4) is inserted through a central axial hole 48a of the rubber bush 47 to pivotally support the link plate 46 on the bracket 29 in a swingable manner. A cushion support piece 55 is provided on a side of the link plate 46. A cushion material 57 (Fig. 10) made of rubber or the like is fitted into the cushion support piece 55. Reference numeral 55a denotes a notch for prevention of coming-off of the cushion material.

The cross member 49 is fixed to a rear end of the link plate 46 to connect the left and right link plates 46 together.

A boss 66 having an axial hole 50a for insertion therethrough of the engine suspension shaft 50 (Fig. 4) is formed inside and toward a lower edge of a longitudinally intermediate portion of the link plate 46. The engine suspension shaft 50 is inserted between the bosses 66 of the left and right link plates 46, and the engine unit 15 (Figs. 1 and 4) is suspended from and supported on the engine suspension shaft 50.

Fig. 10 is a view illustrating a configuration of the cushion material fitted into the link plate shown in Fig. 9, Fig. 10(A) being a plan view, Fig. 10(B) being a front view, and Fig. 10(C) being a side view.

As shown in the figures, the cushion material 57 made of rubber or the like comprises an upper cushion 57a and a lower cushion 57b, and the cushion support piece 55 described above (Fig. 9) is fitted into a gap 57c between the upper and lower cushions 57a, 57b.

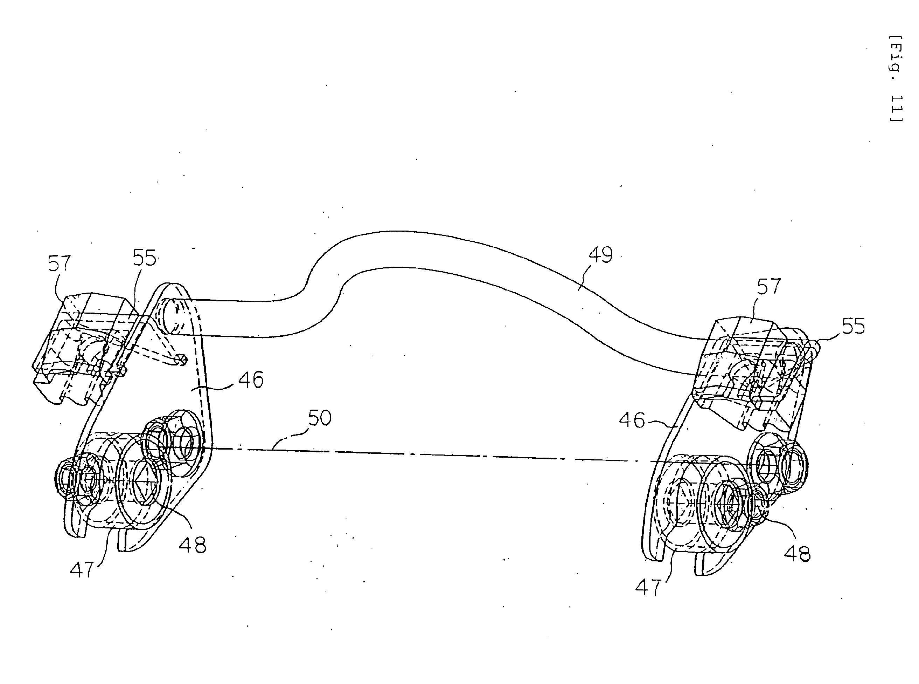

Fig. 11 is a perspective view showing a state, in which the link plates are assembled.

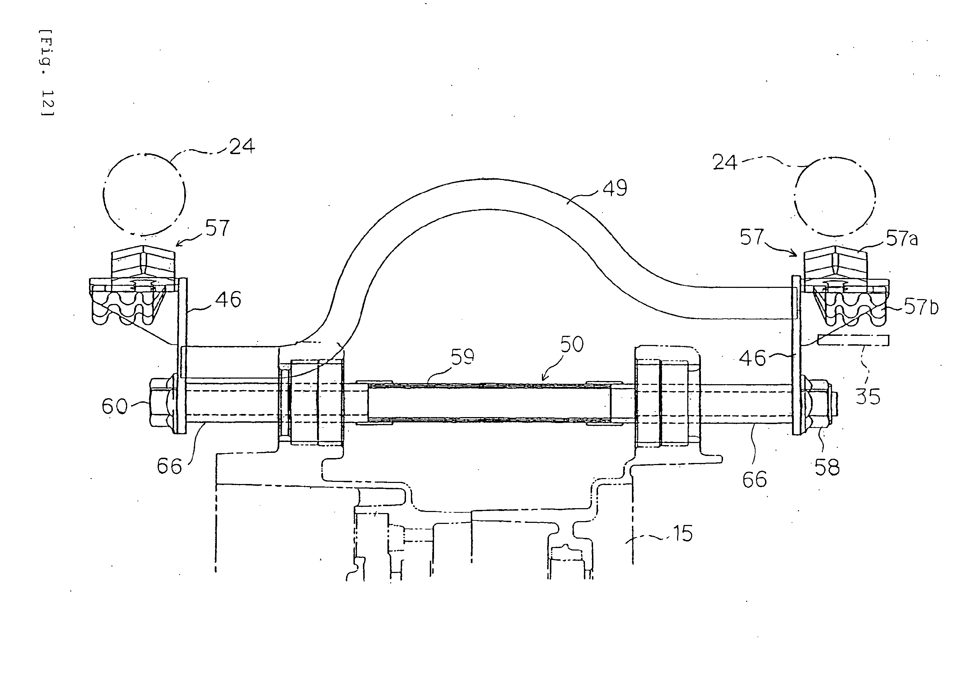

As shown in the figure, the left and right link plates 46 are connected together by the cross member 49, a central portion of which is curved to be convex upward. The cushion materials 57 are mounted on outer sides of the respective left and right link plates 46. The engine suspension shaft 50 (see Fig. 12) is mounted and inserted between the left and right link plates 46.

Fig. 12 is a front view showing a state, in which the link plates are assembled.

The engine suspension shaft 50 is provided and inserted between the left and right link plates 46, and the engine unit 15 is suspended from and supported on the engine suspension shaft 50. In this embodiment, the engine suspension shaft 50 is composed of the bosses 66 on the inner surfaces of the respective link plates 46, a single bolt 60 inserted through a sleeve 59 intermediate between the bosses, and nuts 58 fastened to ends of the bolt.

The cushion material 57 mounted on the link plate 46 is arranged between one (one on the left side of the body in this embodiment) of the left and right main frames 24 and the stopper 35 (see Fig. 8) fixed to the main frame 24. When the link plate 46 swings about the pivot 48 (Fig. 11) disposed at the forward end thereof, the upper cushion 57a of the cushion material 57 abuts against the main frame 24, or the lower cushion 57b abuts against the stopper 35, thus absorbing an impact or vibrations. In addition, the left and right main frames 24 may be provided with the stoppers 35.

As described above, the invention provides a body construction of a scooter type vehicle, in which surroundings of an engine are simplified to achieve miniaturization of a body.

In particular, a body construction of a scooter type vehicle is provided including a head pipe, through which a steering shaft extends, a main frame joined to the head pipe to branch left and right of a body, a cross frame connecting the left and right main frames together at a central portion of the body, a helmet box supported on the main frame at a central portion of the body, a seat provided on the helmet box, an engine unit provided below the helmet box in a state, in which a cylinder head tumbles substantially horizontally forward, and a crankshaft is arranged in the width direction of the vehicle, an intake pipe connected to the cylinder head from above the cylinder head, a throttle body provided on the intake pipe, an air cleaner provided on an end of the intake pipe upstream of the throttle body, and a rear cushion provided on a rear portion of the body, the body construction being configured in that engine suspension brackets are fixed at substantially central portions of the respective left and right main frames to bear link plates, the left and right link plates are connected together by a cross member, an engine support member is provided between the left and right link plates to suspend and support the engine unit, and the throttle body is provided forwardly of a position, in which the engine unit is suspended and supported.

Preferably, a position, in which the engine unit is suspended and supported, is substantially (just) above the crankshaft.

Further, preferably the throttle body is provided forwardly of the cross member.

Also, preferably the cross frame is provided forwardly of the intake pipe.

Moreover, preferably the main frame comprises a down tube joined to the head pipe to extend obliquely rearward, and left and right main frames joined to both left and right sides of a lower end of the down tube to rise obliquely rearwardly at a central portion of the body to extend, and a forward end of the cylinder head is positioned in substantially the same position as, or rearwardly of those of the rising portions of the left and right main frames at the central portion of the body as viewed in side view.

Still further, preferably a forward end of the cylinder head is arranged rearwardly of a forward end of the helmet box.

Also, preferably the cross member is provided across and above the intake pipe, which communicates between the throttle body and the air cleaner.

According to an embodiment, the air cleaner is provided above the engine unit, and the rear cushion is provided to overlap a rear end of the air cleaner, or positioned rearwardly of the rear end as viewed in side view.

Further, preferably the air cleaner is arranged on a side of the rear wheel with a part thereof overlapping the rear wheel in side view, and another part thereof projects toward the rear wheel.

Since the throttle body is preferably arranged forwardly of a position, in which the engine unit is suspended and supported, an intake passage extending from the throttle body to the cylinder head is shortened and an intake system is simplified in construction. In particular, with four-cycle engines, a short intake passage makes the output characteristics suited to high-speed revolution corresponding to the inertia of intake, so that output is heightened in a high-speed region.

Also, since the throttle body is preferably positioned forward, the helmet box provided at a substantially central portion of a bottom surface thereof with a recess to keep out the throttle body can be provided forward to achieve miniaturization of the body.

Furthermore, the engine can be supported in a well-balanced manner by suspending and supporting the engine unit substantially just above the crankshaft, and a compact arrangement and constitution of surroundings of an engine is achieved by arranging the throttle body forwardly of the position of suspension.

Since the throttle body is preferably provided forwardly of the cross member, which connects the left and right link plates for suspension of an engine together, a space at the rear of the throttle body is used to enable simplifying surroundings of an engine in layout without influences on a position of the recess on the bottom surface of the helmet box.

Moreover, preferably the cross frame is provided forwardly of the intake pipe to enlarge a space between the left and right main frames above the engine unit, and an intake system of an engine can be arranged compactly in the space.

Further, preferably the engine unit is accommodated in the main frame, so that sense of incongruity for outward appearance is eliminated and protection of an engine is achieved.

Further, since a forward end of the helmet box is positioned forwardly of a forward end of the cylinder head disposed therebelow, the layout of the whole body can be made small in size by positioning the seat above the helmet box forward.

Furthermore, by preferably arranging the cross member across the intake pipe, which is communicated to the air cleaner, it is possible to provide the cross member efficiently and compactly in a small space above the engine unit and below the helmet box.

Since the rear cushion is preferably provided to overlap a rear end of the air cleaner, or positioned rearwardly of the rear end, a region of interference between the rear cushion and the air cleaner is decreased or removed, so that it is possible to increase the air cleaner in volume.

Moreover, the air cleaner can be increased in volume by overlapping the air cleaner and the rear wheel and projecting a part of the air cleaner toward the rear wheel.

As explained above, in order to provide a body construction of a scooter type vehicle, in which surroundings of an engine are simplified and a miniaturization of a body thereof is achieved, a scooter type vehicle is provided including main frames 24 provided to branch left and right of a body, a helmet box 39 supported on the main frames 24 at a central portion of the body, an engine unit 15 provided below the helmet box 39 in a state, in which a cylinder head 15a tumbles substantially horizontally forward, and a crankshaft 40 is arranged in the width direction of the vehicle, an intake pipe 42a connected to the cylinder head 15a from above the cylinder head 15a, and a throttle body (carburetor 43) provided on the intake pipe 42a, engine suspension brackets are fixed at substantially central portions of the respective left and right main frames 24, link plates 46 are born by the respective engine suspension brackets, the left and right link plates 46 are connected together by a cross member 49, an engine support member (engine suspension shaft 50) is provided between the left and right link plates 46, the engine unit 15 is suspended from and supported on the engine support member 50, and the throttle body 43 is provided forwardly of a position, in which the engine unit 15 is suspended and supported.

## Claims

1. Scooter type vehicle comprising a body frame (20,23,24) and an engine unit (15) swingably suspended and supported at a position of said body frame (20,23,24),
**characterized in that**
a throttle body (43) provided on an intake pipe (42a,42b) of said engine unit (15) is provided forwardly of the position at which the engine unit (15) is suspended and supported.

2. Scooter type vehicle according to claim 1, **characterized in that** the position at which the engine unit (15) is suspended and supported is substantially just above a crankshaft (40) of the engine unit (15).

3. Scooter type vehicle according to claim 1 or 2, **characterized in that** said body frame (20,23,24) includes a head pipe (20) through which a steering shaft (37) extends, a main frame (24) joined to the head pipe (20) to branch rearwardly to the left and right side of the vehicle towards the rear thereof, a cross frame (36) connecting the left and right main frames (24,24) at a central portion of the main frame, and/or a connection member (31) joining said main frames (24,24) at a rear end of the body frame.

4. Scooter type vehicle according to claim 3, **characterized in that** the throttle body (43) is provided rearwardly of the cross frame (36).

5. Scooter type vehicle according to at least one of the claims 1 to 4,
**characterized in that** engine suspension brackets (29) are fixed at substantially central portions of the body frame, in particular at substantially central portions of respective left and right main frames (24) thereof, wherein left and right link plates (46) to which the engine unit (15) is attached are swingably connected to the engine suspension brackets (29).

6. Scooter type vehicle according to at least one of the claims 1 to 5,
**characterized in that** an engine support member (60) is provided between left and right link plates (46) to suspend and support the engine unit, and/or **in that** the right and left link plates (46) are connected together via a cross member (49), the cross member (49) being preferably provided rearwardly of the throttle body (43).

7. Scooter type vehicle according to claim 6, **characterized in that** the cross member (49) is provided across and above the intake pipe (42a,42b), which communicates between the throttle body (43) and the air cleaner (17).

8. Scooter type vehicle according to at least one of the claims 1 to 7,
**characterized in that** a helmet box (39) is supported on a main frame (24) at a central portion of the body frame, a seat (13) is provided on the helmet box (39), and/or the engine unit (15) is provided below the helmet box (39) in a state, in which a cylinder head (15a) tumbles substantially horizontally forward, wherein a crankshaft (40) is arranged in the width direction of the vehicle, and wherein preferably a forward end of the cylinder head (15a) is arranged rearwardly of a forward end of the helmet box (39).

9. Scooter type vehicle according to at least one of the claims 1 to 8,
**characterized in that** the intake pipe (42a,42b) is connected to a cylinder head (15a) of the engine unit (15) from above the cylinder head (15a), and/or **in that** an air cleaner (17) is provided on an end of the intake pipe (42a,42b) upstream of the throttle body 43).

10. Scooter type vehicle according to at least one of the claims 1 to 7,
**characterized in that** an air cleaner (17) is provided above the engine unit (15), and a rear cushion (19) is provided to overlap a rear end of the air cleaner (17), or positioned rearwardly of the rear end of the air cleaner (17), as viewed in side view, and/or **in that** the air cleaner (17) is arranged on a side of a rear wheel (16) with a part thereof overlapping the rear wheel (16), and another part (17a) thereof projecting toward the rear wheel (16).

11. Scooter type vehicle according to at least one of the claims 3 to 10,
**characterized in that** the main frame comprises a down tube (23) joined to the head pipe (20) to extend obliquely rearward, and left and right main frames (24) joined to both left and right sides of a lower end of the down tube (23) to rise obliquely rearwardly at a central portion of the body frame to extend, and/or **in that** a forward end of a cylinder head (15a) is positioned in substantially the same position as, or rearwardly of those positions of the rising portions of the left and right main frames (24) at the central portion of the body frame as viewed in side view.
